# FASCICULE DE BREVET EUROPEEN

(11) **EP 2 139 288 B1**
(45) Date de publication et mention de la délivrance du brevet: **20.03.2013**
(21) Numéro de dépôt: 09163216.6
(22) Date de dépôt: 19.06.2009
(51) Int. Cl.: H04W 64/00

(54) **Procédé permettant de localiser un point d'accès radio d'un réseau de télécommunication**
Verfahren zum Finden eines Zugangspunkts in einem Telekommunikationsnetzwerk
Method for locating an access point in a telecommunications network

(30) Priorité: 25.06.2008 FR 0854219
(43) Date de publication de la demande: 30.12.2009
(73) Titulaire: Alcatel Lucent, 75007 Paris (FR)
(72) Inventeur: Lauriol, Jean-Michel, 67400 Illkirch (FR)
(74) Mandataire: Sciaux, Edmond

(56) Documents cités:
- US-A1- 2005 176 420
- US-A1- 2006 126 537

## Description

L'invention concerne un procédé permettant de localiser un point d'accès radio d'un réseau de télécommunication, ainsi qu'un terminal et un point d'accès radio adaptés pour la mise en oeuvre de ce procédé. Elle concerne notamment les points d'accès radio conformes à la norme IEEE 802.11, appelée communément Wi-Fi.

Il est courant d'installer des dizaines de points d'accès radio dans les Locaux d'une entreprise pour constituer un réseau local informatique sans fil. Quand une installation vient d'être terminée, il est nécessaire de vérifier la couverture radio procurée par tous les points d'accès installés. Pour étudier cette couverture, il est connu d'utiliser un logiciel client de réseau sans fil, exécuté sur un ordinateur portable équipé d'un adaptateur radio, pour mesurer et afficher l'amplitude de chaque signal radio reçu par cet ordinateur portable. Un tel logiciel client fonctionne sans qu'il soit nécessaire de l'associer à un point d'accès. Pour un lieu donné, ce logiciel client affiche une liste de points d'accès radio disponibles, avec pour chacun :
- Une amplitude de signal reçu,
- une identité de réseau (SSID),
- et une adresse MAC (Medium Access Control) de point d'accès.

Pour la maintenance d'un réseau local sans fil, il est souvent nécessaire de localiser un point d'accès qui est connu par son adresse MAC, ou son adresse IP. En général, un terminal peut recevoir plusieurs points d'accès, mais avec des amplitudes inégales. En principe, il se connecte automatiquement sur le point d'accès procurant le signal d'amplitude maximale, et ayant une identité de réseau donnée.

Si un terminal reçoit mal tous les points d'accès du réseau sans fil, il faut localiser tous les points d'accès radio qui sont dans le voisinage du terminal, puis les vérifier visuellement (Orientation et hauteur des antennes, câble d'alimentation, câble de liaison au réseau câblé, etc). Pour localiser chaque point d'accès radio, il est connu de consulter une carte des locaux, portant les emplacements des points d'accès et portant les adresses MAC de ces points d'accès. Malheureusement une telle carte n'est pas toujours mise à jour quand un point d'accès radio est déplacé ou supprimé. Parfois, une telle carte n'existe même pas. Parfois, elle comporte des erreurs dues à une trop grande densité des points d'accès par rapport à l'échelle de la carte.

Lorsque la position d'un point d'accès a été repérée sur une carte, il reste à vérifier l'identité du point d'accès en lisant l'adresse MAC inscrite sur d'accès. Malheureusement une telle carte n'est pas toujours mise à jour quand un point d'accès radio est déplacé ou supprimé. Parfois, une telle carte n'existe même pas. Parfois, elle comporte des erreurs dues à une trop grande densité des points d'accès par rapport à l'échelle de la carte.

Lorsque la position d'un point d'accès a été repérée sur une carte, il reste à vérifier l'identité du point d'accès en lisant l'adresse MAC inscrite sur une étiquette collée sur le boîtier du point d'accès. Cette vérification est souvent malaisée parce que les points d'accès radio sont souvent placés en hauteur, près des plafonds.

Le document US 2006/126537 décrit un système permettant de connaître facilement l'identifiant d'un réseau local sans fil, le numéro de canal, et le type de chiffrement, en vue de faciliter l'établissement d'une connexion lorsqu'un nouveau terminal doit être connecté à ce réseau local sans fil. Ce système comporte un dispositif de télécommande comportant un émetteur-récepteur infrarouge ou Bluetooth, par exemple un assistant numérique personnel muni d'un programme adapté pour interroger le réseau via un de ses points d'accès radio comportant lui aussi un émetteur-récepteur infrarouge ou Bluetooth. Ce dispositif demande au réseau des informations sur le réseau, puis reçoit ces informations, puis les communique à tout terminal qu'un utilisateur souhaite connecter au réseau.

Le but de l'invention est de rendre plus facile la localisation d'un point d'accès radio donné, connu par un identifiant, mais dont la position est inconnue.

Un premier objet de l'invention est un procédé permettant de localiser un point d'accès radio d'un réseau de télécommunication, consistant à émettre un message destiné à ce point d'accès radio, puis à émettre un signal à partir de ce point d'accès radio ;
caractérisé en ce qu'il consiste à envoyer à ce point d'accès radio à localiser un message contenant soit une adresse propre à ce point d'accès, soit une adresse de diffusion commune à tous les points d'accès radio du réseau, et une commande activant dans ce point d'accès un moyen de signalisation lumineuse ou sonore.

Le procédé ainsi caractérisé permet d'identifier très facilement un point d'accès radio donné (identifié par une adresse qui lui est propre), sans utiliser de carte, et sans aller lire une adresse sur le boîtier du point d'accès, grâce au fait que le point d'accès porte un moyen de signalisation perceptible à distance par un être humain, et qu'il est activable à distance via le réseau local en le désignant par une adresse qui lui est propre.

L'invention a aussi pour objet un terminal pour un réseau de télécommunication comportant au moins un point d'accès radio, comportant des moyens pour envoyer un message destiné à un point d'accès radio à localiser, et caractérisé en ce message contient soit une adresse propre à ce point d'accès, soit une adresse de diffusion commune à tous les points d'accès radio du réseau, et une commande susceptible d'activer dans ce point d'accès un moyen de signalisation lumineuse ou sonore; cette commande contenant une indication de durée pour l'activation du moyen de signalisation.

L'invention a aussi pour objet un point d'accès radio pour réseau sans fil, comportant des moyens pour recevoir un message, caractérisé
- en ce qu'il comporte un moyen de signalisation lumineuse ou sonore,
- et en ce que lesdits moyens pour recevoir un message comportent des moyens pour décoder un message contenant une adresse propre à ce point d'accès, ou une adresse de diffusion commune à tous les points d'accès radio du réseau, et une commande susceptible d'activer ce moyen de signalisation ; cette commande contenant une indication de durée pour l'activation du moyen de signalisation.

L'invention a aussi pour objet un dispositif programmable comportant des moyens de stockage sur lesquels est enregistré un programme, ce programme comportant des instructions qui, lorsqu'elles sont exécutées, réalisent les étapes du procédé selon l'invention.

L'invention sera mieux comprise et d'autres caractéristiques apparaîtront à l'aide de la description ci-dessous et des figures l'accompagnant :
- La figure 1 représente un exemple de réseau local d'entreprise, comportant des points d'accès radio, et illustre un premier exemple de mise en oeuvre du procédé selon l'invention.
- La figure 2 illustre un deuxième exemple de mise en oeuvre du procédé selon l'invention.
- La figure 3 illustre un troisième exemple de mise en oeuvre du procédé selon l'invention.
- La figure 4 représente un exemple de réalisation du point d'accès radio selon l'invention.

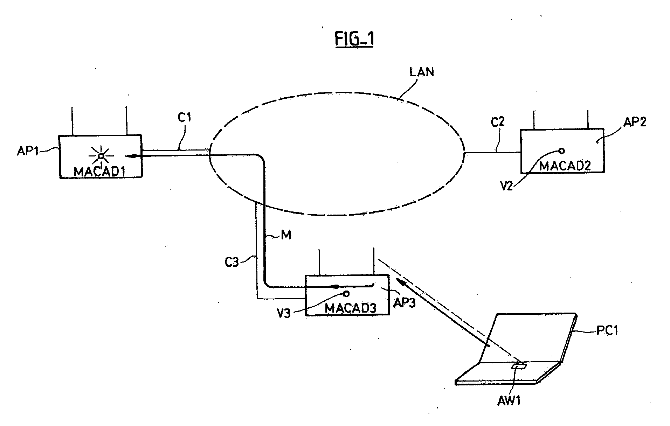

Le réseau local d'entreprise représenté sur la figure 1 comporte une partie câblée LAN utilisant la technologie Ethernet par exemple, et des points d'accès radio, de type Wi-Fi par exemple, notamment les points d'accès AP1, AP2, AP3 représentés à titre d'exemple. Ils ont respectivement pour adresse MAC : MACAD1, MACAD2, MACAD3 ; et ils sont reliés au réseau local LAN par des câbles Ethernet classiques C1, C2, C3. Par exemple, on cherche à localiser le point d'accès radio AP1 qui diffuse de manière classique un signal indiquant son adresse MAC, MACAD1, et l'identité du réseau. On peut faire trois sortes de test pour localiser le point d'accès AP1 :
- Un test à partir d'un terminal relié par câble au réseau local LAN.
- Un test à partir d'un terminal connecté par radio à un point d'accès radio quelconque, AP2 ou AP3, autre que point d'accès AP1.
- Un test à partir d'un terminal connecté par radio au point d'accès radio AP1 dont on veut déterminer la localisation.

Conformément à l'invention, chacun des points d'accès radio AP1, AP2, AP3 est muni d'un moyen de signalisation. Dans cet exemple, c'est un voyant, V1, V2, V3, respectivement. Bien entendu, la couleur de ce voyant est choisie différente de celles des autres voyants équipant classiquement les points d'accès AP1, AP2, AP3 pour d'autres fonctions.

Lorsqu'un utilisateur veut localiser le point d'accès identifié par une adresse MAC ou IP donnée, propre à ce point d'accès, il connecte un terminal au réseau local LAN et il exécute sur ce terminal un outil logiciel permettant de le connecter au réseau local LAN de cette entreprise, et de faire parvenir, au point d'accès à localiser, un message d'activation de son moyen de signalisation.

Dans un premier exemple de mise en oeuvre du procédé selon l'invention, illustré par la figure 1, on utilise un ordinateur portable PC1 muni :
- d'un adaptateur Wi-Fi intégré, AW1 ;
- et d'un outil logiciel permettant de se connecter au réseau local LAN d'entreprise, via un point d'accès radio, et de mettre en oeuvre le procédé selon l'invention.

Dans cet exemple, l'ordinateur PC1 est connecté au réseau local LAN via un point d'accès radio quelconque, différent du point d'accès AP1 à localiser, par exemple le point d'accès radio AP3. L'utilisateur le choisit sur une liste des points d'accès reçus, affichée par l'outil logiciel sur l'écran de l'ordinateur PC1. L'utilisateur indique à l'outil logiciel l'adresse MAC, MACAD1, ou l'adresse IP, du point d'accès AP1 dont on veut déterminer la localisation. L'utilisateur indique en outre à l'outil logiciel la durée d'activation du moyen de signalisation V1 qui doit être activé sur le point d'accès AP1 à localiser.

Cet outil est capable d'envoyer, via la liaison radio vers le point d'accès radio AP3 et via les câbles Ethernet du réseau local LAN, un message M à un point d'accès radio désigné par son adresse MAC (ou son adresse IP). Dans cet exemple, ce message contient :
- l'adresse MACAD1 (ou l'adresse IP) du point d'accès destinataire AP1,
- une commande (Allumer, ou faire clignoter, le voyant),
- et une durée (Par exemple, allumer pendant dix secondes).
L'utilisateur dispose alors de cette durée pour observer les points d'accès radio dans le voisinage, et repérer celui dont le voyant est allumé.

Bien entendu, l'ordinateur PC1 peut être remplacé par un assistant numérique personnel, ou bien tout autre terminal capable de se connecter au réseau local LAN et d'exécuter l'outil logiciel. La connexion de l'ordinateur PC1 au réseau local LAN peut aussi être faite par un câble Ethernet classique.

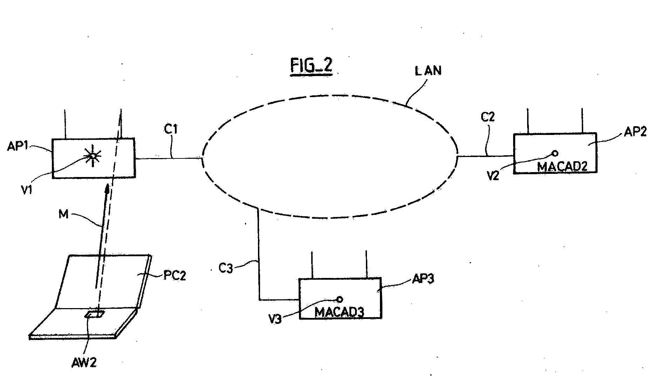

La figure 2 illustre un deuxième exemple de mise en oeuvre du procédé selon l'invention. On utilise un ordinateur portable PC2 muni, comme l'ordinateur PC1,
- d'un adaptateur Wi-Fi intégré, AW2 ;
- et d'un outil logiciel permettant de se connecter au réseau local LAN de cette entreprise, via un point d'accès radio, et de mettre en oeuvre le procédé selon l'invention.

Dans cet exemple, l'ordinateur PC2 est connecté au réseau local LAN via le point d'accès radio AP1 dont la localisation est à déterminer. Le point d'accès AP1 est sur une liste des points d'accès reçus, affichée par l'outil logiciel sur l'écran de l'ordinateur PC2. L'utilisateur désigne ce point d'accès AP1 dans la liste pour connecter l'ordinateur PC2 à ce point d'accès AP1, et il indique en outre à l'outil que cet utilisateur veut déterminer la localisation de ce point d'accès. L'utilisateur indique en outre la durée d'activation du moyen de signalisation V1.

Cet outil est capable d'envoyer, via la liaison radio vers le point d'accès radio à localiser, AP1, un message M dans lequel le point d'accès à localiser est désigné par son adresse MAC, MACAD1 ou son adresse IP. Ce message peut être envoyé au niveau de la couche 2 (Trames Ethernet du réseau local) ou au niveau de la couche 3 (Niveau IP) du modèle OSI. Le message contient donc :
- une adresse (MAC ou IP) désignant le point d'accès destinataire, AP1,
- une commande (Allumer, ou faire clignoter, le voyant),
- et une durée (Par exemple, allumer pendant dix secondes).
Par exemple, si le message est émis au niveau 2, dans un réseau sans fil conforme à la norme IEEE 802.11, on peut utiliser le message PROBE REQUEST défini dans cette norme, en mettant les données à transmettre (Adresse du point d'accès, commande, etc) dans les champs libres du message PROBE REQUEST.

Selon une variante de mise en oeuvre, le message M contient en outre l'adresse MAC du terminal qui émet le message M sur la liaison radio vers le point d'accès à localiser ; et chaque point d'accès est agencé de façon à n'activer son moyen de signalisation que s'il reçoit un message contenant, en plus de la commande d'activation, l'adresse d'un terminal qui s'est connecté à ce point d'accès. Chaque point d'accès tient à jour une liste des adresses respectives des terminaux qui lui sont connectés, et il vérifie la présence de l'adresse du terminal expéditeur chaque fois qu'un terminal lui envoie un message d'activation de son moyen de signalisation. S'il ne trouve pas l'adresse MAC du terminal parmi les adresses enregistrées dans la liste, il ne tient pas compte du message. Ainsi le moyen de signalisation ne peut pas être activé autrement que par un ordinateur directement connecté, par radio, au point d'accès considéré.

Selon une autre variante de mise en oeuvre, un même message est diffusé simultanément à tous les points d'accès radio du réseau. Le message envoyé l'adresse MAC du terminal qui envoie le message :
- Soit on utilise un mécanisme de diffusion au niveau de la couche 3 (IP) avec donc une adresse IP de diffusion qui va implicitement mettre en oeuvre une diffusion au niveau de la couche 2 (MAC).
- Soit on utilise seulement un mécanisme de diffusion au niveau de la couche 2 (Ce sont des trames Ethernet sans adresse IP) avec une adresse MAC de diffusion, dans le cas d'un réseau avec un seul sous-réseau IP.
Tous les points d'accès radio activent alors leurs moyens de signalisation simultanément.

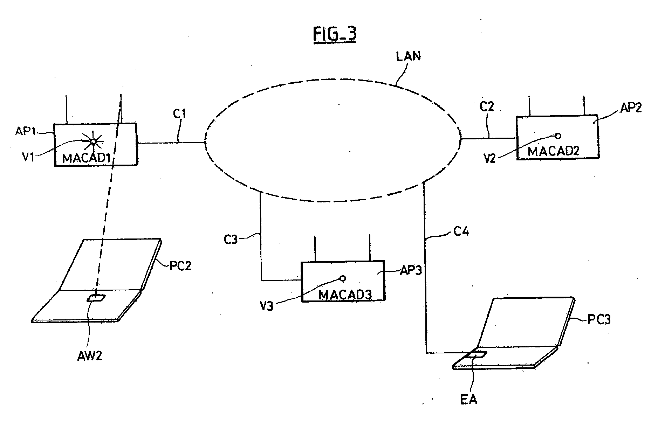

La figure 3 illustre un troisième exemple de mise en oeuvre du procédé selon l'invention. Un ordinateur PC2 s'est connecté au point d'accès radio AP1 au moyen de son adaptateur Wi-Fi AW2. On voudrait localiser le point d'accès radio AP1, mais l'ordinateur PC2 n'est pas muni du logiciel outil selon l'invention. On utilise alors un ordinateur portable PC3 qui peut être un ordinateur dédié à l'administration du réseau. Cet ordinateur PC3 est muni :
- d'un adaptateur Ethernet EA ;
- et d'un outil logiciel permettant de connecter l'ordinateur PC3 au réseau local LAN de cette entreprise, via un câble Ethernet C4, et de mettre en oeuvre le procédé selon l'invention.

Dans cet exemple, l'ordinateur PC3 est connecté au réseau local LAN via le câble Ethernet C4. L'utilisateur connaît, par un moyen quelconque, l'adresse MAC ou l'adresse IP du point d'accès radio à localiser. Par exemple, il lit l'adresse MAC du point d'accès AP1 sur l'ordinateur PC2, au moyen du logiciel qui pilote l'adaptateur Wi-Fi AW2. Sur l'ordinateur PC3, l'utilisateur indique à l'outil logiciel l'adresse MAC, MACAD1, ou l'adresse IP, du point d'accès AP1 dont on veut déterminer la localisation. L'utilisateur indique en outre la durée d'activation du moyen de signalisation V1.

Cet outil est capable d'envoyer, via les câbles Ethernet du réseau local LAN, un message M à un point d'accès radio désigné par son adresse MAC (ou son adresse IP). Ce message contient cette adresse MAC (ou IP) du point d'accès destinataire, une commande (Allumer, ou faire clignoter, le voyant), et une durée (Par exemple, allumer pendant dix secondes).

La programmation d'un outil logiciel pour chaque test décrit ci-dessus est à la portée d'un homme de l'Art. Bien entendu, toutes les sortes de test décrites ci-dessus peuvent être intégrées dans un même outil logiciel, sous la forme d'options à choisir par l'utilisateur.

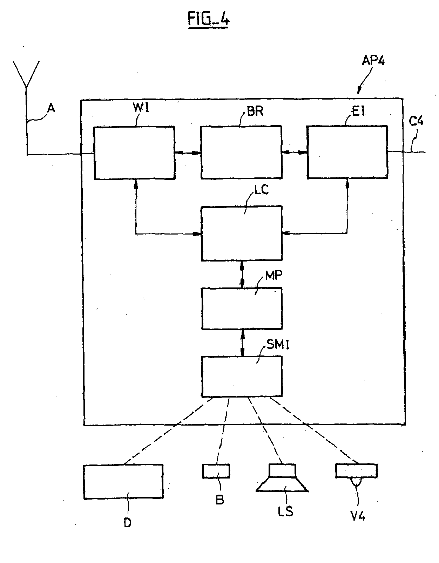

La figure 4 représente de manière plus détaillée un exemple de réalisation AP4 du point d'accès radio selon l'invention. Il comporte :
- Une interface radio Wi-Fi, WI, reliée à un système d'antennes A.
- Une interface Ethernet, EI, reliée à un câble Ethernet C4.
- Un pont Wi-Fi-Ethernet BR, reliant l'interface interface radio WI et l'interface Ethernet El.
- Un circuit de localisation, LC, relié à la fois à l'interface radio Wi-Fi, WI, et à l'interface Ethernet El, pour recevoir des messages d'activation du moyen de signalisation.
- Un circuit MP de traitement des messages, reçus par le circuit de localisation LC. Il décode la commande contenue dans un message. S'il y a lieu de vérifier que le terminal expéditeur est connecté au point d'accès considéré, le circuit MP fait cette vérification, et valide le message.
- Un circuit d'interface SMI pour recevoir des commandes décodées par le circuit MP de traitement des messages, et pour alimenter alors un moyen de signalisation facilement perceptible par une personne située à quelques mètres : Un haut-parleur LS, ou un ronfleur B, ou un afficheur alphanumérique D capable d'afficher en gros caractères une adresse MAC en hexadécimal ; ou une combinaison de plusieurs de ces moyens.

Selon un mode de réalisation, l'afficheur D affiche l'adresse MAC (ou IP) du point d'accès radio AP4 lorsqu'il a reçu un message d'activation de son moyen de signalisation. En effet, il est très souvent difficile de lire l'adresse MAC imprimée sur le boitier : Le bottier est généralement situé en hauteur. L'adresse est écrite en petits caractères, et parfois invisible car située sur la face cachée du boîtier. Il est donc avantageux de pouvoir la lire sur un afficheur lumineux lisible à plusieurs mètres de distance.
Selon un autre mode de réalisation, l'afficheur D affiche deux adresses MAC ou IP : l'adresse du point d'accès radio AP4, et celle d'un terminal, connecté par radio à ce point d'accès, et qui a envoyé le message d'activation du moyen de signalisation. Il est utile d'afficher cette dernière adresse si on veut rechercher les localisations de plusieurs points d'accès radio simultanément à partir de plusieurs terminaux mobiles respectivement connectés à ces points d'accès. Dans ce cas, il peut arriver que les moyens de signalisation de plusieurs points d'accès soient activés simultanément, et il est donc avantageux de pouvoir déterminer visuellement quel terminal est connecté à quel point d'accès. Bien entendu, pour utiliser cette possibilité, l'adresse MAC (ou IP) du terminal qui émet le message doit être mise dans le message.

La réalisation de l'interface radio WI, de l'interface Ethernet El, et du pont Wi-Fi-Ethernet, BR, est classique.

La réalisation du circuit de localisation LC, du circuit de traitement des messages MP, et de l'interface SMI est à la portée d'un homme de l'Art.

## Revendications

1. Procédé permettant de localiser un point d'accès radio (AP1) d'un réseau de télécommunication, consistant à émettre un message destiné au point d'accès à localiser (AP1), puis à émettre un signal à partir de ce point d'accès radio ;
**caractérisé en ce qu'**il consiste à envoyer à ce point d'accès radio (AP1) lorsqu'un utilisateur veut le localiser, un message (M) contenant soit une adresse propre à ce point d'accès, soit une adresse de diffusion commune à tous les points d'accès radio du réseau, et contenant une commande activant dans ce point d'accès (AP1) un moyen de signalisation (V1) lumineuse ou sonore, perceptible à distance par un être humain ; cette commande contenant une indication de durée pour l'activation du moyen de signalisation (V1).

2. Procédé selon la revendication 1, **caractérisé en ce qu'**il consiste en outre à afficher une adresse propre au point d'accès, sur ledit moyen de signalisation, lorsqu'il est activé.

3. Procédé selon la revendication 1, **caractérisé en ce qu'**il consiste en outre à afficher, sur un moyen de signalisation lumineuse (D), une adresse propre à un terminal connecté par radio à ce point d'accès, et qui a envoyé à ce point d'accès (AP4) un message contenant une commande activant un moyen de signalisation dans ce point d'accès.

4. Point d'accès radio (AP1) d'un réseau de télécommunication, comportant des moyens (LC, MP, SMI) pour recevoir un message (M),
**caractérisé**
- **en ce qu'**il comporte un moyen de signalisation (V1) lumineuse ou sonore, perceptible à distance par un être humain,
- et **en ce que** lesdits moyens (LC, MP, SMI) pour recevoir un message comportent des moyens pour décoder un message (M) contenant une adresse propre à ce point d'accès, ou une adresse de diffusion commune à tous les points d'accès radio du réseau, et contenant une commande susceptible d'activer ce moyen de signalisation (V1), cette commande contenant une indication de durée pour l'activation du moyen de signalisation (V1).

5. Point d'accès radio selon la revendication 4 **caractérisé en ce qu'**il comporte en outre des moyens pour recevoir, dans ledit message (M) l'adresse d'un terminal qui a émis ce message ; et **en ce que** ledit moyen de signalisation comporte des moyens pour afficher cette adresse.

6. Dispositif programmable comportant des moyens de stockage sur lesquels est enregistré un programme, ce programme comportant des instructions qui, lorsqu'elles sont exécutées, réalisent les étapes du procédé selon l'une des revendications 1 à 3.

## Claims

1. A method for locating a radio access point (AP1) of a telecommunication network, consisting of sending a message intended for the access point to be located (AP1), then of sending a signal from that radio access point; **characterized in that** it consists of sending to that radio access point (AP1) whenever a user wants to locate it, a message (M) containing either an address specific to that access point, or a broadcast address shared by all of the network's radio access points, and containing a command activating within that access point (AP1) a light- or sound-based signaling means (V1), which can be perceived remotely by a human being; which command contains a duration indication for the activation of the signaling means (V1).

2. A method according to claim 1, **characterized in that** it further consists of displaying an address specific to the access point, on said signaling means, when it is activated.

3. A method according to claim 1, **characterized in that** it further consists of displaying, on a light-based signaling means (D), an address specific to a terminal connected by radio to that access point, and that sent that access point (AP4) a message containing a command activating a signaling means within that access point.

4. A radio access point (AP1) of a telecommunication network, comprising means (LC, MP, SMI) for receiving a message (M),
**characterized**
- **in that** it comprises a light or sound-based signaling means (V1) which can be perceived remotely by a human being,
- and **in that** said means (LC, MP, SMI) for receiving a message comprise means for decoding a message (M) containing an address specific to that access point, or a broadcast address shared by all of the network's radio access points, and containing a command that can activate a light- or sound-based signaling means (V1), which command contains a duration indication for the activation of the signaling means (V1).

5. A radio access point according to claim 4, **characterized in that** it further comprises means for receiving, within said message (M) the address of a terminal that sent that message; and **in that** said signaling means comprises means for displaying that address.

6. A programmable device comprising storage means on which a program is saved, this program comprising instructions which, when executed, carry out the stages of the method according to one of claims 1 to 3.

## Patentansprüche

1. Verfahren, welches es ermöglicht, einen Funkzugangspunkt (AP1) eines Telekommunikationsnetzwerks zu lokalisieren und darin besteht, eine für den zu lokalisierenden Zugangspunkt (AP1) bestimmte Nachricht auszugeben und anschließend von diesem Funkzugangspunkt aus ein Signal auszugeben;
**dadurch gekennzeichnet, dass** es darin besteht, diesem Funkzugangspunkt (AP1), wenn ein Nutzer diesen lokalisieren möchte, eine Nachricht (M) zu senden, welche entweder eine diesem Zugangspunkt eigene Adresse oder eine allen Funkzugangspunkten des Netzwerks gemeinsame Broadcast-Adresse enthält, und ebenfalls einen Befehl enthält, der in diesem Zugangspunkt (AP1) ein von Menschen aus der Entfernung wahrnehmbares Lichtsignal- oder akustisches Signalisierungsmittel (V1) aktiviert; wobei dieser Befehl eine Dauerangabe für die Aktivierung des Signalisierungsmittels (V1) enthält.

2. Verfahren nach Anspruch 1, **dadurch gekennzeichnet, dass** es weiterhin darin besteht, eine dem Zugangspunkt eigene Adresse auf dem besagten Signalisierungsmittel anzuzeigen, wenn dieses aktiviert ist.

3. Verfahren nach Anspruch 1, **dadurch gekennzeichnet, dass** es weiterhin darin besteht, auf einem Lichtsignalmittel (D) eine einem Endgerät, welches über Funk mit diesem Zugangspunkt verbunden ist und diesem Zugangspunkt (AP4) eine Nachricht mit einem Befehl zum Aktivieren eines Signalisierungsmittels in diesem Zugangspunkt gesendet hat, eigene Adresse anzuzeigen.

4. Funkzugangspunkt (AP1) eines Telekommunikationsnetzwerks, umfassend Mittel (LC, MP, SMI) zum Empfangen einer Nachricht (M),
**dadurch gekennzeichnet,**
- **dass** er ein von Menschen aus der Entfernung wahrnehmbares Lichtsignal- oder akustisches Signalisierungsmittel (V1) umfasst,
- und **dass** die besagten Mittel (LC, MP, SMI) zum Empfangen einer Nachricht Mittel zum Decodieren einer Nachricht (M), welche eine diesem Zugangspunkt eigene Adresse oder eine allen Funkzugangspunkten des Netzwerks gemeinsame Broadcast-Adresse enthält und ebenfalls einen Befehl enthält, der geeignet ist, dieses Signalisierungsmittel (V1) zu aktivieren, umfassen, wobei dieser Befehl eine Dauerangabe für die Aktivierung des Signalisierungsmittels (V1), enthält.

5. Funkzugangspunkt nach Anspruch 4, **dadurch gekennzeichnet, dass** er weiterhin Mittel zum Empfangen, in der besagten Nachricht (M), der Adresse eines Endgeräts, welches diese Nachricht ausgegeben hat, umfasst; und dass das besagte Signalisierungsmittel Mittel zum Anzeigen dieser Adresse umfasst.

6. Programmierbare Vorrichtung mit Speichermitteln, auf denen ein Programm gespeichert ist, wobei dieses Programm Befehle enthält, um bei deren Ausführung die Schritte des Verfahrens gemäß einem der Ansprüche 1 bis 3 durchzuführen.
